# EUROPEAN PATENT APPLICATION

(11) **EP 4 545 625 A1**
(43) Date of publication of application: **30.04.2025**
(21) Application number: 24206798.1
(22) Date of filing: 15.10.2024
(51) Int. Cl.: C11D 17/04, A47L 13/19

(54) **REMOVING TOXIC CHEMICALS FROM CONTAMINATED SURFACES**

(30) Priority: 17.10.2023 US 202363590963 P; 22.01.2024 US 202418418566; 01.04.2024 US 202418623222
(71) Applicant: Guild Associates, Inc., Dublin, OH 43016 (US)
(72) Inventor: Farve, Kristian, Dayton, 43016 (US); Knapke, Michael, Plain City, 43016 (US); Rossin, Joseph, Columbus, 43016 (US); Harding, Rachel, Dublin, 43016 (US); Sherry, Lauren, Cambridge, 43016 (US)
(74) Representative: sgb europe

(57) **Abstract**

A process comprising: contacting an item with a dry media to remove a first portion of a chemical warfare agent from the item; contacting the item with solvent to contaminate the solvent with a second portion of the chemical warfare agent from the item; and removing the contaminated solvent from the item. A device comprising: a first side comprising a dry media applicator to remove a first portion of a chemical warfare agent from an item; and a second side comprising an absorptive material to remove a solvent contaminated with a second portion of a chemical warfare agent from the item, wherein the first and second sides are of a unitary whole.

## Description

The present disclosure relates to removal of toxic and/or hazardous chemicals from contaminated surfaces where the toxic and/or hazardous chemicals are present at both the external surface and absorbed, dissolved or otherwise located below the external surface.

This description of background is provided for the purpose of generally describing the context of the disclosure. Work of the presently named inventor(s), to the extent the work is described in this background section, as well as aspects of the description that may not otherwise qualify as prior art at the time of filing, are neither expressly nor impliedly admitted as prior art against the present disclosure.

When mission essential equipment or other items of importance are exposed to chemical warfare agents, the item may be decontaminated before being brought back into service. Chemical warfare agent decontamination is often performed in stages. The first stage of chemical warfare agent decontamination is referred to as "Immediate Decontamination." Immediate Decontamination is performed as soon as possible following a chemical exposure and is intended to remove the bulk of the chemical warfare agent from the contaminated item prior to transportation of the item away from the "hot zone" in which the chemical agent exposure has occurred. Immediate Decontamination is often performed by personnel in the hot zone. Following Immediate Decontamination, the item undergoes "Thorough Decontamination." It is during Thorough Decontamination that substantially all traces of chemical warfare agent are removed from the contaminated item (which has undergone Immediate Decontamination), and the item may be brought back into service.

Another form of chemical warfare agent decontamination is referred to as "Operational Decontamination." Operational Decontamination is performed by individual warfighters or units in an area subjected to chemical warfare agent exposure. During Operational Decontamination, mission essential equipment, materiel or work areas are subject to decontamination to minimize chemical warfare agent contact and transfer hazards in order to provide on-scene commanders viable decision space to continue or terminate operations, such as for example to sustain operations or complete an on-going mission.

Immediate Decontamination and Operational Decontamination are performed by military personnel for the purpose of removing a substantial amount of chemical warfare agents (CW agents) from contaminated equipment, material or work areas following chemical agent exposure. Examples of chemical agents include Tabun (GA), Soman (GD), Sarin (GB), O-ethyl-S-(2-diisopropyl-aminoethyl) methyl phosphonothioate (VX), and bis-(2-chloroethyl) sulfide (HD). Immediate and Operational Decontamination operations are intended to be performed immediately following chemical exposure and targets removal of a substantial amount (for example, greater than about 90%, greater than 95%, or greater than 99%) of toxic chemical from contaminated equipment, materiel or work areas (referred to collectively as "items"), which may include for example, weapons, communication equipment, garments, ruck sacks, goggles, tables, vehicles, without limitation. The purpose of Immediate and Operational Decontamination is to provide decision space to on-scene commanders regarding mission continuation or termination involving (1) reduce contact hazards associated with the contaminated item, (2) reduce the spread of CW agents and (3) to lessen the burden on subsequent Thorough Decontamination operations.

Operational Decontamination is performed immediately following chemical warfare agent exposure for the purpose of sustaining operations for a discrete period of time prior to undergoing Thorough Decontamination. As such, Operational Decontamination demands a higher level of decontamination than associated with Immediate Decontamination, but does not impose the levels of decontamination associated with Thorough Decontamination.

Currently, an M295 decontamination mitt is employed in Immediate and Operational Decontamination operations by the US military. An example M295 decontamination mitt is provided by Luxfer Magtech, Cincinnati, Ohio. The M295 decontamination mitt is comprised of a polyethylene mitt designed to fit over one hand (either left or right). A piece of pad material is located on a face or palm-side of the mitt. Located between the pad material and the polyethylene mitt is decontamination media, such as a silica-aluminum oxide media. Referred to as A-200, the A-200 media is a reactive adsorbent capable of rapidly absorbing toxic chemical warfare agents and decomposing all or a portion of the absorbed chemical warfare agent. The A-200 powder has an average particle size on the order of 30 µm. The M295 functions by allowing the decontamination media to pass through the pad material, with the released decontamination media contacting the contaminated surface by means of physical action involving the mitt and absorbing the toxic chemical into its pores. Rubbing the loose decontamination media across the surface of the contaminated item is effective in its ability to remove CW agents from said contaminated item. Direct contact between the decontamination media and the contaminated surface results in the chemical warfare agent absorbing into the pores of the decontamination media, removing a significant fraction of the chemical warfare agent from the contaminated surface(s) of the item(s) being decontaminated.

One drawback associated with the M295 decontamination mitt is that the device will not remove chemical warfare agent that has absorbed into, dissolved into, or otherwise located below the external surface of paints, plastics, coatings, fabrics, etc. (i.e. chemical warfare agent that is located below the external surface, referred to as "sub-surface" chemical warfare agent). As a result, the extent of decontamination, referred to as decontamination efficacy, is limited for items whereby a portion of the chemical agent is absorbed, dissolved into, or otherwise located below the external surface (sub-surface chemical warfare agent). Although the external surface of the item subject to treatment using the M295 may be clean, chemical warfare agent present below the external surface (that is to say, sub-surface chemical warfare agent) will not be removed. Said sub-surface chemical warfare agent will migrate to the external surface over time and present both a contact, and off-gas hazard to unprotected personnel if exposed to the item. Contact hazard refers to the direct transfer of chemical warfare agent from a contaminated item to another item or person. Off-gas hazard refers to the chemical warfare agent off-gassing from the contaminated item, where vapor phase chemical warfare agent now presents an inhalation hazard to personnel and wildlife.

Achieving a higher level of chemical agent decontamination at the front line would require that sub-surface chemical warfare be removed to a greater extent than that removed by merely a surface treatment. At the front line, resources are limited, especially resources related to chemical warfare agent decontamination. Equipment necessary to support Thorough Decontamination is large, bulky, cumbersome and in some cases energy intensive. As such, said equipment required to achieve Thorough Decontamination is not available to front-line personnel who may encounter and/or be exposed to chemical weapons or other toxic or hazardous compounds. Where the M295 decontamination mitt does not substantially remove sub-surface chemical warfare agent, the decontamination efficacy may be well below 90%.

An object exists to quickly and efficiently remove surface and sub-surface chemical warfare agents to allow warfighters to conduct Immediate or Operational Decontamination operations. The object is solved by the invention as defined by the independent claims. Embodiments are described in the dependent claims, the following description, and the drawings.

A first aspect of the invention concerns a process to remove chemical warfare agents and other toxic compounds from items where a portion of the chemical warfare agent is located below the external surface (i.e. sub-surface) of the item. The process enables Immediate and Operational Decontamination (decontamination efficacy) to be performed by front-line personnel with limited available resources. Immediate and Operational Decontamination (decontamination efficacy) may reduce risk to personnel, but also reduce the risks and burdens associated with performing subsequent Thorough Decontamination operations. Although designed to decontaminate small items or small surface areas of items, the process can be readily scaled and applied to larger items and larger surface areas.

The first aspect of the invention provides a process comprising: contacting an item with a dry media to remove a first portion of a chemical warfare agent from the item, contacting the item with solvent to contaminate the solvent with a second portion of the chemical warfare agent from the item, and removing the contaminated solvent from the item.

Another aspect of the invention relates to a device comprising: a first side comprising a dry media applicator to remove a first portion of a chemical warfare agent from an item, and a second side comprising an absorptive material to remove a solvent contaminated with a second portion of a chemical warfare agent from the item, wherein the first and second sides are of a unitary whole.

According to the first aspect, there is provided a process that involves the following steps:
1. Contacting the contaminated item with a dry (decontamination) media to remove at least a first portion of a chemical warfare agent from the contaminated item (e.g., an external surface of it).
2. Contacting the contaminated item with a solvent to contaminate the solvent with a second portion of the chemical warfare agent (e.g., to remove a sub-surface chemical warfare agent).
3. Removing the solvent from the item following completion of step 2, preferably by contacting a dry (decontamination) media with the solvent-laden item to remove the solvent (containing extracted chemical warfare agent) as opposed to allowing the solvent to drip from the item.

Steps two and three of the process can be repeated additional times in some embodiments to further enhance the overall decontamination efficacy.

The dry media employed in step 1 of the process may comprise any absorptive material and/or an absorptive/reactive material, capable of removing chemical warfare agents from a contaminated surface. The dry media may include, such as for example, loose absorptive powders, absorptive powders adhered to textile, absorptive cloths, absorptive rags and absorptive towels made from synthetic or natural fibers, or mixtures thereof. Absorptive powders may be adhered to textiles. The dry media may be configured in forms that may include, such as for example, a packet of loose powder, single or multiple sheets of absorptive fabric, or dry media in the form of a mitt. The dry media may be configured in the form of a mitt. The dry media may be configured in the form of a dual-sided mitt. For example, the dry media may comprise a material selected from one or more of carbon, resins, and zeolites.

In some embodiments, an absorptive/reactive material comprises a material selected from one or more of oxides, hydroxides, and oxy-hydroxides of a metal selected from aluminum, silicon, magnesium, calcium, titanium, manganese, iron, cobalt, copper, zinc, and zirconium, and mixed metal oxides, hydroxides and oxy-hydroxides.

The solvent employed in step 2 of the process may be any solvent capable of displacing subsurface chemical warfare agent. Examples of solvent available at a military front line may include for example water, fuel, soapy water and bleach. A limited amount of water may be available from canteens or other drinking sources. Fuel may be available from vehicles. Soapy water may be prepared for example by blending dry soap with water from a canteen, using a package (such as that which houses the dry media) as a mixing volume, for example. For example, the process may comprise adding water to a soap-impregnated textile, and wherein contacting the item with solvent comprises contacting the item with the textile.

Bleach solutions may be prepared for example by combining powdered bleach with water from a canteen, using a package (such as that which houses the dry media) as a mixing volume. According to the process, the solvent would be applied by merely pouring the solution onto the item and allowing the solvent to drip from the item. Alternatively, the solvent may be applied to the item using an applicator, such as for example sponge, cloth, etc. that would be provided with the dry media. A sponge, cloth or other dry applicator may be impregnated with dried soap or bleach.

Once applied to the contaminated item, the solvent may contain chemical warfare agent and therefore it is desired that the contaminated solvent be removed from the item. Otherwise, the solvent will evaporate away, and the chemical warfare agent extracted by the solvent will remain associated with the item. One method for removing contaminated solvent from the item is to allow the solvent to drip from the item. However, a drip method may use an excessive amount of solvent to remove contaminated solvent. An embodiment of the process may provide to remove the solvent using a dry media consistent with those employed in step 1 of the process. Dry media employed in step 3 of the process can be comprised of any absorptive material capable of removing solvent from a contaminated surface. The dry media may include, such as for example, loose absorptive powders, absorptive powders adhered to textile, absorptive cloths, absorptive rags, or absorptive towels made from synthetic or natural fibers, or mixtures thereof. Absorptive powders may be adhered to textiles. The dry media can be configured in forms that may include, such as for example, a packet of loose absorptive powder, single or multiple sheets of absorptive fabric, or in the form of a mitt. The dry media may be configured in the form of a mitt. The dry media may be configured in the form of a dual-sided mitt, allowing for one side to be used in step 1 of the process and another side to be used in step 3 of the process.

The first step of the process (step 1) involves removing the chemical warfare agent from the external surface using an absorptive or absorptive/reactive material. The second step of the process (step 2) involves contacting the surface with a solution capable of extracting contaminants absorbed, dissolved or otherwise located below the external surface. The solution is then allowed to remain in contact with the surface for a discrete period of time. The final step of the process (step 3) involves removing the solution from the external surface. Steps two and three can be repeated additional times to further enhance the decontamination effectiveness. The process is intended for use in immediate decontamination and operational decontamination applications, where it is desired to remove the bulk of the chemical warfare agents from clothing, equipment or other contaminated surfaces. Although applicable to other chemical warfare agent decontamination missions, the process is intended to be used at the front line or by advanced units which may be far removed from logistical support and need a light weight, compact, low volume process for meeting situationally appropriate chemical agent decontamination objectives.

Following contamination with chemical warfare agents or other toxic/hazardous compounds, items, military personnel in Mission Oriented Protective Posture (MOPP) garments, vehicles and surrounding areas may become contaminated with persistent chemical warfare agents and other toxic compounds that may include for example GB, GD, VX and HD. Examples of "items" include weapons, garments and associated footwear, radios and other communication equipment, helmets, ruck sacks, goggles (including night vision), binoculars, canteens, ammunition, detection devices, location devices, tents, tables, chairs and other items necessary to complete a military mission, without limitation. The term "item" may also refer to vehicles such as those used to transport warfighters and mobile weapons platforms. Further, "items" and military personnel in MOPP garments may come into contact with a chemical warfare agent when entering an area that has been contaminated with chemical warfare agent or other toxic chemicals. Levels of chemical warfare agent exposure may exceed 10 g of agent per square meter (g/m²) of area.

In cases involving Immediate Decontamination, the front-line warfighter may remove the bulk of the chemical warfare agent from items prior to transportation to a Thorough Decontamination line. Further, chemical warfare agent may be removed from vehicles used to transport warfighters and associated items to the Thorough Decontamination line, with the parts of the vehicles to which the warfighter contacts being subjected to Immediate or Operational Decontamination. Parts and surfaces of items may include for example seats, steering wheel, arm rest, doorknobs (both interior and exterior) and gear shift knobs.

In cases involving Operational Decontamination, items of mission importance (mission critical) may become contaminated with chemical warfare agent and other toxic compounds. These items may be decontaminated by the front-line warfighter to an extent that allows the mission to continue.

When conducting Immediate and Operational Decontamination operations, it is desired to minimize the spread of chemical warfare agent and to reduce the contact hazard. Immediate and Operational Decontamination operations are often performed by the warfighter in remote areas away from support. As such, resources are limited to those performing Immediate and/or Operational Decontamination operations. Once exposed to chemical warfare agent, the warfighter (in chemical protective garments), may rapidly decontaminate their items and either return to a safe zone to undergo Thorough Decontamination, or may rapidly decontaminate their items and continue with their mission (as per Operational Decontamination requirements). In order to effectively accomplish their mission, it is imperative that the warfighter has a small, compact and versatile decontamination kit capable of meeting decontamination objectives.

Once an item and/or vehicle is contacted with chemical warfare agent, the chemical warfare agent may be present at the external surface and may also begin to absorb, dissolve or otherwise penetrate below the external surface. Chemical warfare agent at the external surface may be removed, as tests conducted with metallic surface have indicated, wherein greater than 99% of the chemical warfare agent can be removed. Chemical warfare agent located below the external surface, referred to as sub-surface chemical warfare agent, may be more difficult to remove. While not bound by any theory, the sub-surface chemical warfare agent may first be transported to the external surface before the chemical warfare agent can be removed. This process of extracting subsurface chemical warfare agent from an item may be difficult, especially for front-line warfighters with limited resources.

All or parts of many items are comprised of components that will allow for sub-surface chemical warfare agents. Items comprised of plastics, textile and paints may be susceptible to having sub-surface chemical warfare agent associated with them following a chemical agent exposure. In one example, many items and vehicles are painted with Chemical Agent Resistant Coating (CARC). Referred to as CARC, the coating is used on metallic parts of vehicles and many mission-critical items to provide protection against the elements while providing a level of chemical warfare agent resistance.

The process described herein provides the warfighter with a small, compact, and versatile means of meeting objectives associated with Immediate and Operational Decontamination. Small, compact is defined as weighing less than 1000 g, preferably less than 300 g, and more preferably less than 100 g occupying (packaged) a volume less than 1,000 ml, preferably less than 300 ml and more preferably less than 100 ml. The process may be performed using equipment, with the exception of the solvent, contained within a small package designed to fit into the warfighters pocket. The solvent, preferably aqueous based or fuel based, is expected to be available at the front-line; although quantities may be limited. Water may be available from the canteen or camel back, for example. Fuel may be available from jerry cans or fuel tanks associated with vehicles.

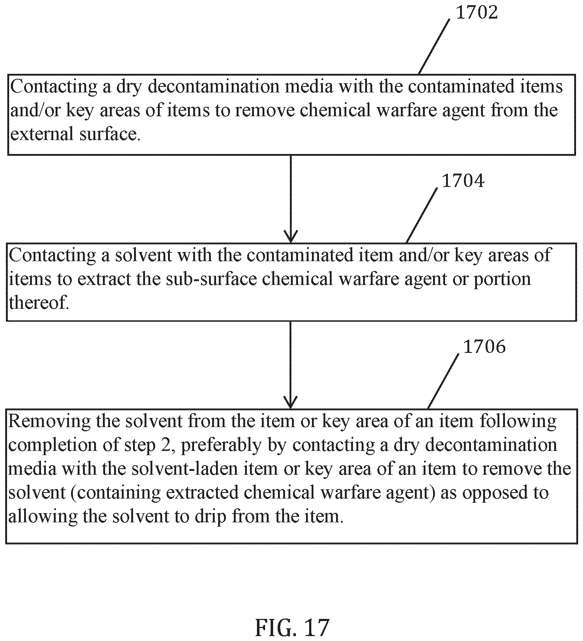

FIGURE 17 shows a block diagram of a process that employs two or more components to achieve Immediate and Operational Decontamination objectives and involves three or more steps. These steps are described below:
1. Contacting 1702 a dry decontamination media with contaminated items and/or surface areas of items to substantially remove chemical warfare agent from the external surface.
2. Contacting 1704 a solvent with the contaminated item and/or surface areas of items to extract sub-surface chemical warfare agent or a portion thereof.
3. Removing 1706 the solvent from the item or surface area of an item following completion of step 2, preferably by contacting a dry decontamination media with the solvent-laden item or surface area of an item to remove the solvent (containing extracted chemical warfare agent) as opposed to allowing the solvent to drip from the item.

Steps two and three of the process can be repeated additional times to further enhance the overall decontamination efficacy.

Step one may be performed using dry media. The term "dry" refers to any media applied to the surface without leaving behind a liquid residue. Dry media includes any media capable of absorbing the chemical warfare agent from the external surface of the item. The dry media employed in step 1 of the process can be comprised of any absorptive material capable of removing chemical warfare agents from a contaminated surface. The dry media may include, such as for example, loose absorptive or absorptive/reactive powders, absorptive or absorptive/reactive powders adhered to textile (cloths, rags, towels, without limitation) made from synthetic or natural fibers, or mixtures thereof. Absorptive or absorptive/reactive powders may be adhered to textiles.

The term "powder" refers to any granule, microbead, colloid, or other geometric form less than about 1,000 µm in size, less than about 300 µm in size, and less than about 30 µm in size. "Absorptive" refers to any porous material that will absorb the chemical warfare agent from the surface without any appreciable destruction/detoxification of said chemical warfare agent. "Absorptive/reactive" refers to any porous material that will absorb and detoxify an appreciable fraction, such as greater than about 25% and preferably greater than about 50%, and more preferably greater than about 90% of the absorbed chemical warfare agent following about 24 hours of contact. Examples of absorptive powders may include carbon, resins, and zeolites. Examples of absorptive/reactive powders may include oxides, hydroxides and oxy-hydroxides of aluminum, silicon, magnesium, calcium, titanium, manganese, iron, cobalt, copper, zinc and zirconium or mixtures thereof. Mixed metal oxides, hydroxides and oxy-hydroxides are also examples of absorptive/reactive powders. For purposes of this document, a metal oxide is comprised of metal and oxygen, a metal hydroxide is comprised of metal and hydroxyl groups while a metal oxy-hydroxide is comprised of a metal and bridging oxygen plus hydroxyl groups. Metal oxy-hydroxides and mixed-metal oxy-hydroxides are examples. Examples of metal oxy-hydroxides include zirconium oxy-hydroxide (often referred to as zirconium hydroxide), and aluminum oxy-hydroxide (often referred to as aluminum hydroxide or pseudo-boehmite). Examples of mixed metal oxy-hydroxides include silicon-zirconium oxy-hydroxide and titanium-zirconium oxy-hydroxide.

Absorptive or absorptive/reactive powders may be adhered to textiles. This is because when using loose powders, not all the powder may be applied to the contaminated surface, as a portion of the powder may spill from the item or become airborne. The loose powder presents a further issue in that the loose powder may get into mechanisms and cause malfunctions, such as for example mechanisms associated with weapons. Absorptive or absorptive/reactive powders adhered to textiles allow for the direct contact of the powder with the contaminated surface while addressing deficiencies associated with the use of loose powders. "Textile" refers to any flexible or semi-flexible substrate onto which absorptive or absorptive/reactive powders may be adhered. Examples included natural and synthetic fabrics (knitted, woven or nonwoven), plastics and rubbers. Powders may be adhered to textiles to which an impermeable or semi-impermeable backing have been laminated.

Cloths, fabrics, including microfiber cloths, sponges, without limitation are examples of dry media that can also be used to remove chemical warfare agent from the external surface of items.

The dry media can be configured in any form that allows for contacting the dry media with the external surface of the item. Dry media forms may include such as for example a packet of loose powder, single or multiple sheets of fabric, or in the form of a mitt. The dry media may be configured in the form of a mitt. The dry media may be configured in the form of a dual-sided mitt. This is because the dual-sided mitt may allow for removing chemical warfare agent with one side, then rotating the mitt on the hand to remove solvent following completion of step 2 of the process.

Step 2 of the process may be performed following completion of Step 1 and involves adding solvent to the item to remove sub-surface chemical warfare agent. There are a number of solvents that may effectively displace sub-surface chemical warfare agents from items and bring the chemical warfare agent to the external surface where the chemical warfare agent can be removed. These solvents include hydrofluoroethers (e.g. HFE 7100), alcohols (e.g. isopropyl alcohol), hydrofluoroethers blended with alcohols (e.g. HFE7100IPA), alkanes and aromatic hydrocarbons to name a few. Front line warfighters; however, may not have and likely will not have access to said solvents and may thus be reliant upon resources at hand. In said case, solvent selection may be limited to water and fuel, or solvent that can be prepared by blending small amounts of additives to water or fuel. Said resources may also be limited in quantity, so the resource, for example water or fuel, may be used sparingly. A small amount of water, such as for example less than 100 ml, and as little as less than 10 ml can be obtained from sources available at the front line that may include for example canteens and camel backs. Water may also be available from sources that may include near-by streams, ponds, puddles, or other sources of standing water. Fuel can be obtained from vehicle sources that may include jerry cans and fuel tanks.

Water can be used directly as a solvent to displace sub-surface chemical warfare agents that are water soluble, examples of which include chemical warfare agents GB and VX. A small amount of water, such as about 100 ml or less, may be sufficient to treat a one square meter area. Water may not be effective in displacing subsurface chemical warfare agents that are not water soluble, one example of which includes HD. Substances may be added to water to enhance the solubility of non-water soluble chemical warfare agents. Examples of which include soap, bleach, and other surfactants. Small amounts, such as less than 100 g, preferably less than 10 g, may be included in a package containing the dry media. Alternatively, a dry applicator comprising soap, bleach or other surfactant may be included in the package containing the dry media. Example applicators included a soap or bleach impregnated sponge, cloth, or towel, where said applicator is of a sufficient size to be included in a package containing dry media while meeting the needs of the application. An applicator may be comprised of soap, bleach or other surfactant, or mixtures thereof. An applicator may be comprised of soap, bleach or other surfactants, or mixtures thereof, in a dried form.

Fuel can be used directly as a solvent for many chemical warfare agents. A small amount of fuel (for example diesel fuel, jet fuel, kerosene or gasoline), such as about 100 ml or less, may be sufficient to treat a one square meter area. Fuel-based solvents may be more effective over water-based solvents in displacing sub-surface HD from contaminated items.

Water or water-based solvents may be more effective over fuel-based solvents due to their ease of access. Water-based solvents can be prepared, for example, by adding water to the package used to contain the dry media followed by adding, for example, soap, bleach, or other surfactants, or mixtures thereof. Soap, bleach, or other surfactants may be in the form of a dry powder. The package may then be closed and mixed by available means, for example shaking.

The solvent may be allowed to merely stand on the item; however, the solvent may be worked into the item using an applicator, for example a sponge, cloth, rag, without limitation, for a discrete period of time to allow the solvent to effectively extract the sub-surface chemical warfare agent from the item. An applicator may be comprised of (i.e. pre-impregnated with) soap, bleach, or other surfactants.

The solvent may be removed from the external surface of the item following completion of step 2. This is because the solvent may contain chemical warfare agent. As the solvent evaporates from the item, the chemical warfare agent may absorb back into the item, and the hazard will remain. In step 3 of the process, the solvent is removed from the item. The solvent may be removed by allowing the solvent to drip from the item; however, as the quantity of solvent may be limited, the effectiveness of said technique may also be limited. Further, the dripped solvent may present a contact hazard. A method involves using dry media as described in step 1 to remove the used solvent from the item. This step 1 may involve contacting the item with the dry media as described in step 1, using said media to remove the solvent from the item.

According to another aspect of the invention, a process may be conducted with the following steps:
1. Contacting a dry decontamination media with the contaminated item to remove chemical warfare agent from the external surface.
2. Contacting a solvent with the contaminated item to remove sub-surface chemical warfare agent.
3. Removing the solvent from the item following completion of step 2, preferably by contacting a dry decontamination media with the solvent-laden item to remove the solvent (containing extracted chemical warfare agent) as opposed to allowing the solvent to drip from the item.

According to a yet another aspect of the invention, a device is provided, comprising: a first side comprising a dry media applicator to remove a first portion of a chemical warfare agent from an item; and a second side comprising an absorptive material to remove a solvent contaminated with a second portion of a chemical warfare agent from the item, wherein the first and second sides are of a unitary whole.

In some embodiments, the device comprises a mitt.

In some embodiments, the dry media applicator of the first side comprises an absorptive material and/or a material selected from carbon, resins, and zeolites.

In some embodiments, wherein the dry media applicator of the first side comprises an absorptive/reactive material.

In some embodiments, the absorptive/reactive material comprises a material selected from oxides, hydroxides, and oxy-hydroxides of a metal selected from aluminum, silicon, magnesium, calcium, titanium, manganese, iron, cobalt, copper, zinc, and zirconium, and mixed metal oxides, hydroxides and oxy-hydroxides.

In some embodiments, the dry media applicator of the first side comprises a media selected from a loose powder, a powder adhered to a textile, a media adhered to synthetic fibers, a media adhered to natural fibers, and a media adhered to sponge.

In some embodiments, the absorptive material of the second side comprises a material selected from microporous fabric and sponge and/or wherein the absorptive material of the second side comprises soap in the material.

It should be understood that all embodiments/examples, described herein can be combined freely with each other. All embodiments/examples that have been described with reference to the first aspect, can be readily applied to the further aspects described herein and vice versa.

Reference will now be made to the drawings in which the various elements of embodiments will be given numerical designations and in which further embodiments will be discussed. Specific references to components, process steps, and other elements are not intended to be limiting.

The figures illustrate examples of devices and methods for removing toxic and/or hazardous chemicals from contaminated surfaces where the toxic and/or hazardous chemicals are present at both the external surface and absorbed, dissolved or otherwise located below the external surface.
FIGURE 1 shows a front perspective view of a mitt, wherein the mitt is in a ready-to-be-worn configuration.
FIGURE 2 shows a front perspective view of the mitt shown in FIGURE 1, wherein the mitt is in a hand receiving configuration.
FIGURE 3 shows a right-side view of the mitt in the hand receiving configuration as shown in FIGURE 2.
FIGURE 4 shows a left-side view of the mitt in the hand receiving configuration as shown in FIGURES 2-3.
FIGURE 5 shows a top view of the mitt in the hand receiving configuration as shown in FIGURES 2-4.
FIGURE 6 shows a bottom view of the mitt in the hand receiving configuration as shown in FIGURES 2-5.
FIGURE 7 shows a front perspective view of the mitt shown in FIGURES 1-14, wherein the mitt is in a worn configuration.
FIGURE 8 shows a front elevation of the mitt in the worn configuration as shown in FIGURE 7.
FIGURE 9 a rear elevation of the mitt in the worn configuration as shown in FIGURES 7-8.
FIGURE 10 shows a right side view of the mitt in the worn configuration as shown in FIGURES 7-9.
FIGURE 11 shows a left side view of the mitt in the worn configuration as shown in FIGURES 7-10.
FIGURE 12 shows a top view of the mitt in the worn configuration as shown in FIGURES 7-11.
FIGURE 13 shows a bottom view of the mitt in the worn configuration as shown in FIGURES 7-12.
FIGURE 14 shows an embodiment of an IMT with the media located at the face of the textile, with an impermeable or semi-impermeable backing material applied to the backside of the textile.
FIGURE 15 shows an embodiment of an IMT configured in the form of a dual-sided mitt with a fold-over edge.
FIGURE 16 shows a seam of an embodiment of an IMT shown in FIGURE 15.
FIGURE 17 shows a block diagram of a process that employs two or more components to achieve Immediate and Operational Decontamination objectives and involves three or more steps.

A reference number for any illustrated element that appears in multiple different figures has the same meaning across the multiple figures, and the mention or discussion herein of any illustrated element in the context of any particular figure also applies to each other figure, if any, in which that same illustrated element is shown.

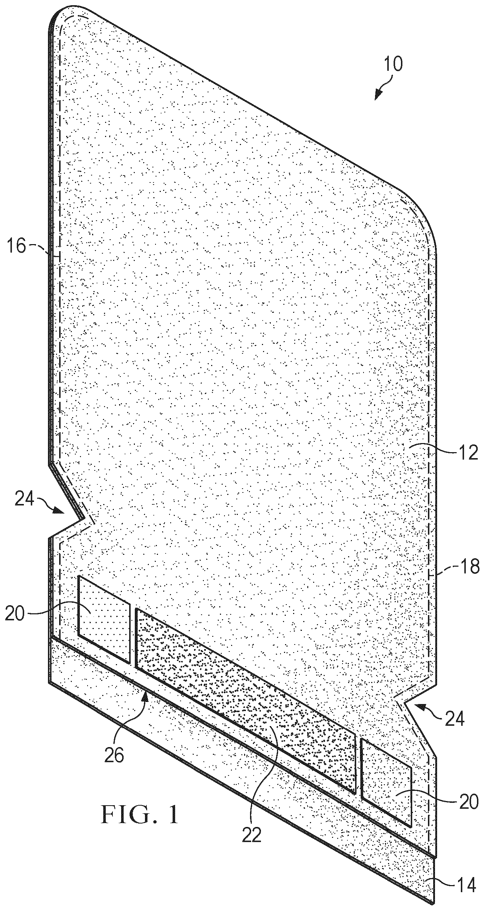

FIGURE 1 shows a front perspective view of a mitt, wherein the mitt is in a ready-to-be-worn configuration. The mitt 10 comprises a front panel 12 and a back panel 14, joined at the left and right sides by left seam 16 and right seam 18, respectively. A notch 24 is provided in the right side of the mitt 10, and another notch 24 is provided in the left side. An opening 26 is defined by the front and back panels 14, 16, wherein a user may insert her hand into the opening 26. Two hook pads 20 and a loop pad 22 are fixed to the front panel 12, and are positioned to allow the mitt to be closed around the user's wrist, such as for example via Velcro^{®} hook and loop pads.

The mitt 10 may comprise dry media in the form of a dual-sided mitt 10. As such, the front panel 12 of the mitt 10 may be used to perform step 1 of the process, while the back panel 14 of the mitt 10 may be used to perform step 3 of the process. The dual-sided mitt 10 may have dry media comprised of absorptive or absorptive/reactive media immobilized onto textile. The mitt 10 may have the font panel 12 comprised of absorptive or absorptive/reactive media immobilized onto textile and the back panel 14 comprised of a microporous fabric, sponge or other highly absorptive material.

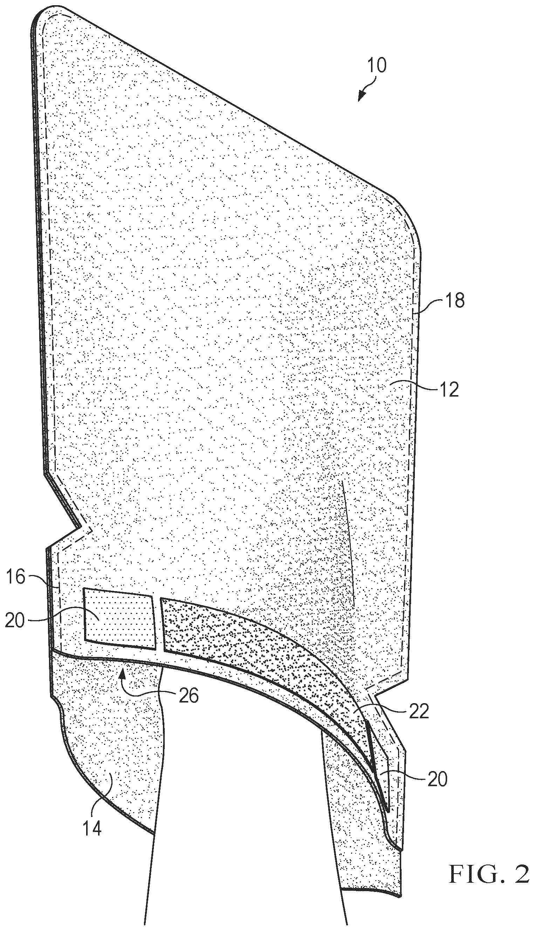

FIGURE 2 shows a front perspective view of the mitt shown in FIGURE 1, wherein the mitt is in a hand receiving configuration. The front panel 12 and back panel 14 may be pulled apart at the opening 26 to an extent sufficient to allow the user to insert her hand.

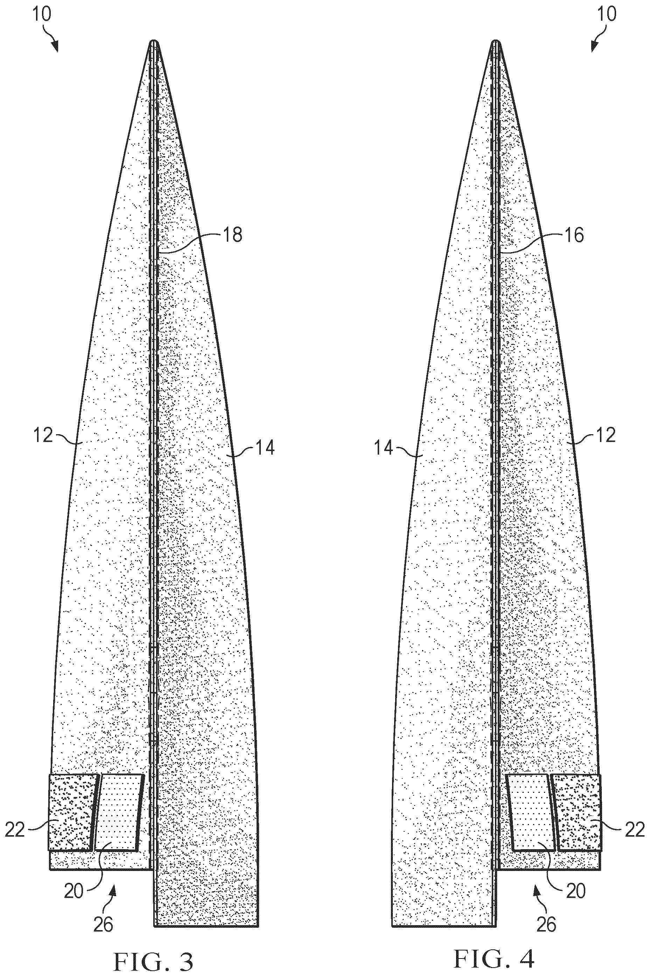

FIGURES 3 and 4 show right-side and left-side views, respectively, of the mitt 10 in the hand receiving configuration as shown in FIGURE 2. The back panel 14 may be longer at the opening 26 than the front panel 12. This difference in the sizes of the panels may allow a user to more easily grab and pull open the sides of the opening 26.

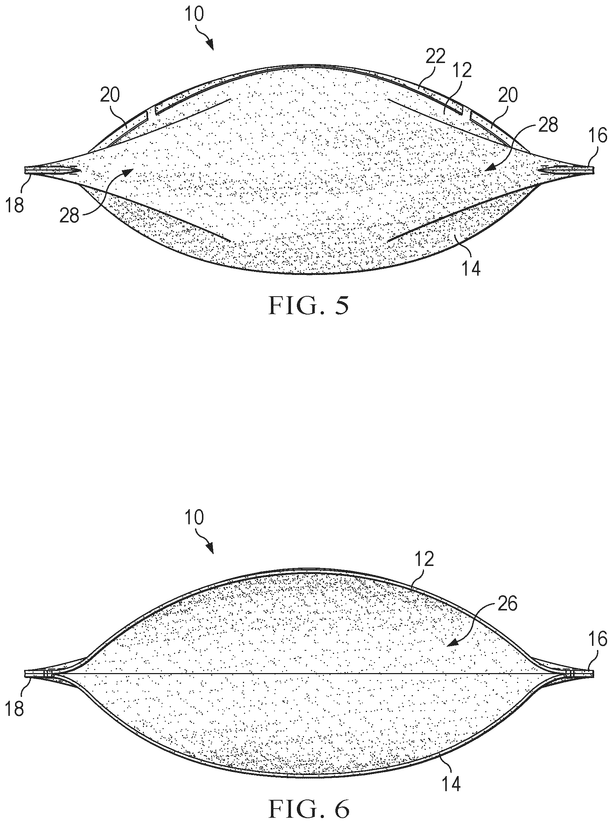

FIGURE 5 shows a top view of the mitt in the hand receiving configuration as shown in FIGURES 2-4. The front panel 12 and the back panel 14 may be joined at the top of the mitt 10 without a discontinuity. In particular, the two panels may be formed from the same piece of material, by folding over a single piece of material on itself so there is a fold 28 at the top, and the sides may be sewn together by seams 16, 18.

FIGURE 6 shows a bottom view of the mitt in the hand receiving configuration as shown in FIGURES 2-5. The front panel 12 and back panel 14 may be pulled apart at the opening 26 to an extent sufficient to allow the user to insert her hand.

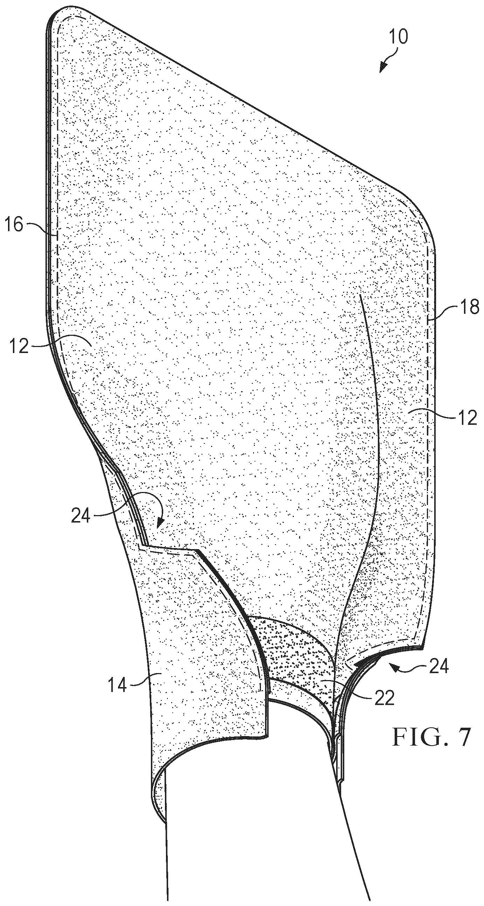

FIGURE 7 shows a front perspective view of the mitt shown in FIGURES 1-6, wherein the mitt is in a worn configuration. A user's hand is shown inserted into the opening 26 (see FIGURE 2) and the mitt 10 is closed around the user's wrist. At the user's wrist, the two sides of the mitt 10 are pulled around the user's wrist until the hook pads 20 (see FIGURE 2) contact and engage the loop pad 22. The notches 24 in the sides of the mitt 10 allow the wrist portions of the mitt 10 to more easily wrap around the user's writs while the hand portions of the mitt 10 are allowed to remain substantially flat.

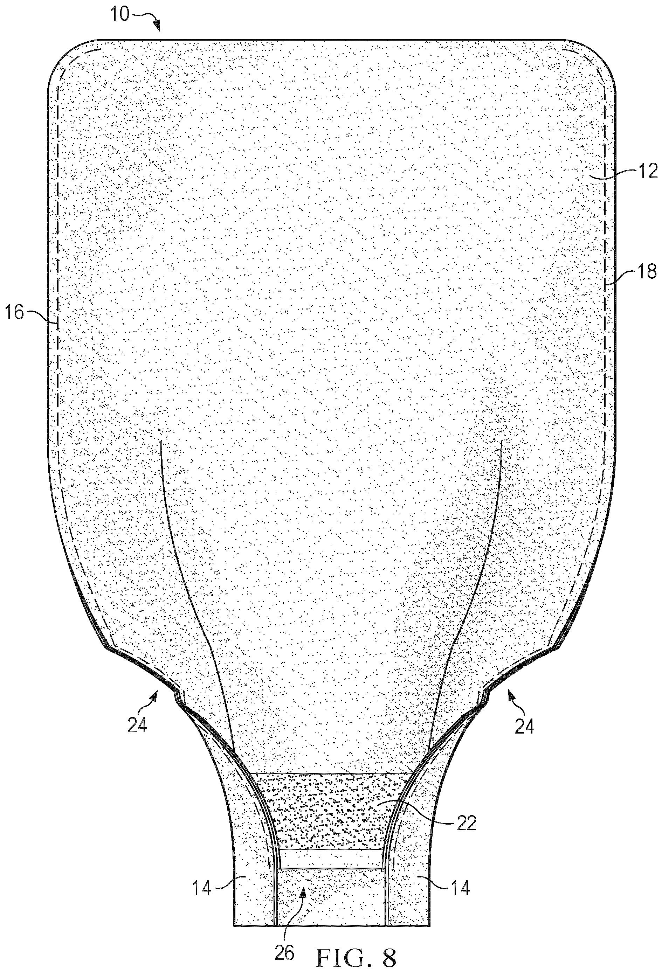

FIGURE 8 shows a front elevation of the mitt in the worn configuration as shown in FIGURE 7.

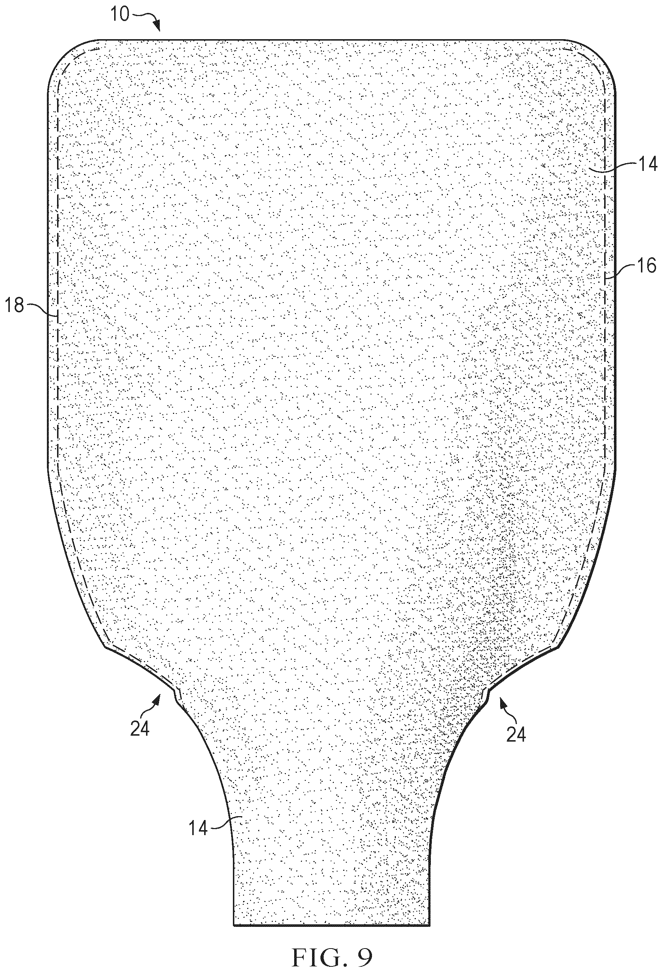

FIGURE 9 a rear elevation of the mitt in the worn configuration as shown in FIGURES 7-8.

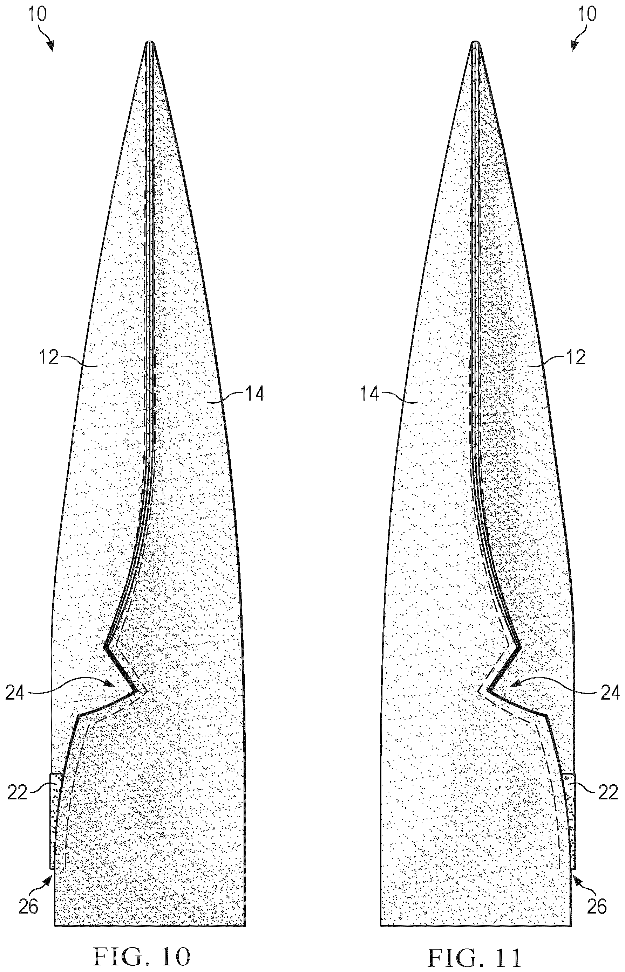

FIGURES 10 and 11 show right-side and left-side views, respectively, of the mitt 10 in the worn configuration as shown in FIGURES 7-9.

FIGURE 11 shows a left side view of the mitt in the worn configuration as shown in FIGURES 7-10.

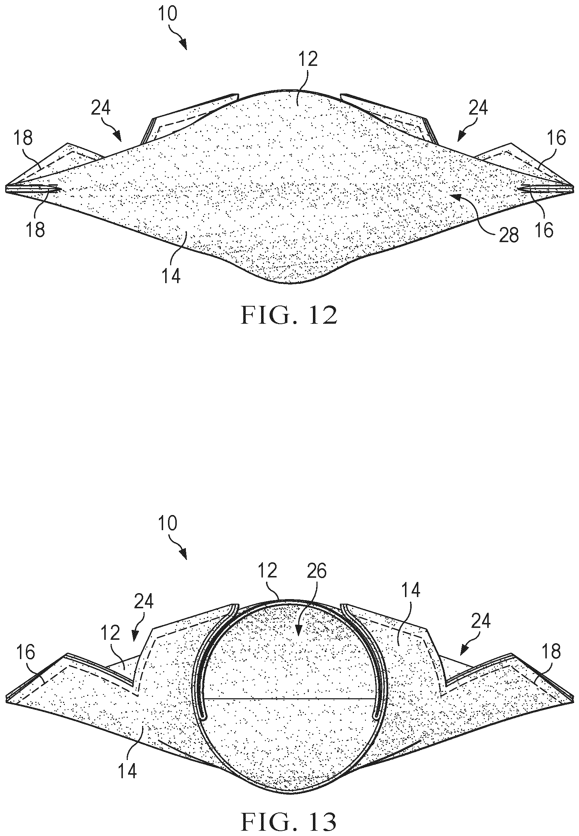

FIGURE 12 shows a top view of the mitt in the worn configuration as shown in FIGURES 7-11. A fold 28 at the top of the mitt 10 joins the front panel 12 to the back panel 14. A left seam 16 and a right seam 18 join the sides of the panels.

FIGURE 13 shows a bottom view of the mitt in the worn configuration as shown in FIGURES 7-12. An opening 26 may be sized to fit around a user's wrist (not shown).

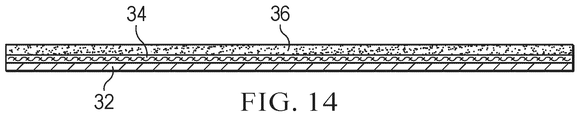

FIGURE 14 shows a cross-sectional side view of a panel of a mitt. The panel may have a liner layer 32, a textile layer 34, and a powdered media layer 36.

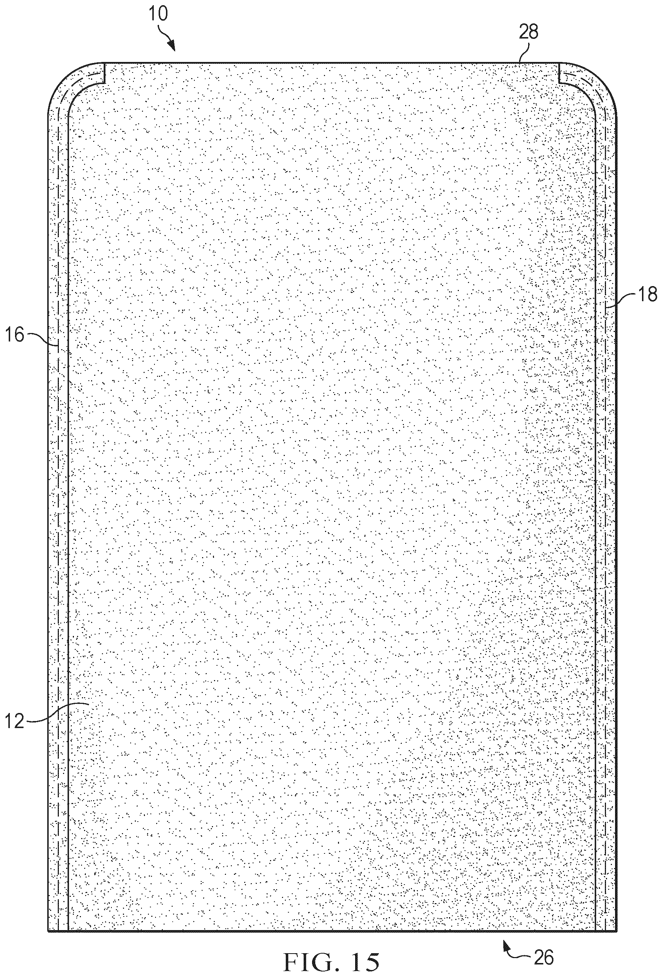

FIGURE 15 shows a front view of a mitt. The mitt 10 may have a hand insert area comprising an opening 26 defined by a front panel 12 and a back panel (not shown). The panels may comprise a single piece of material bent over itself at a fold 28 at the top, and the sides may be joined by a left seam 16 and a right seam 18.

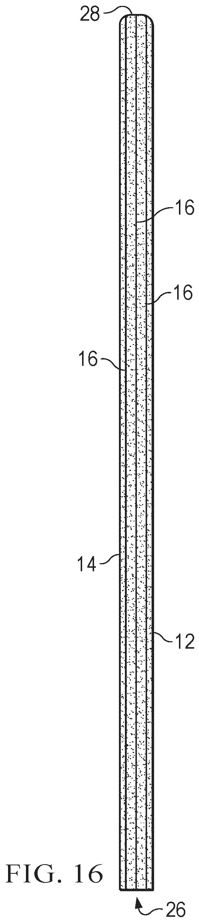

FIGURE 16 shows a left-side view of the mitt shown in FIGURE 15. The mitt may have a fold 28 at the top, and the front panel 12 may be joined to the back panel 14 by a left seam 16 and a right seam (not shown) so that the panels define an opening 26 at the bottom of the mitt 10.

Chemical warfare agents are some of the most toxic and dangerous compounds known. Testing with chemical warfare agents is often carried out at laboratory scale, with microgram quantities of chemical warfare agents employed. Said testing; however, does not allow for evaluation of processes at sufficient scale to allow for accurately assessing the viability of the process. Chemical warfare agent simulants are often used to evaluate decontamination processes at realistic scales. A chemical warfare agent simulant is a compound that has a similar structure and physical properties to that of the corresponding chemical warfare agent but is less toxic. Chemical warfare agent simulants and their use is well known to one skilled in the art. Examples of chemical warfare agent simulant include dimethyl methyl phosphonate (DMMP), which is a simulant for chemical warfare agent GB, 2-chloroethylphenyl sulfide (CEPS), which is a simulant for chemical warfare agent HD, and diethyl phenyl phosphonothioate (DPPT), which is a simulant for chemical warfare agent VX.

CARC-painted material, such as for example stainless steel, is a common military surface. When contacted with chemical warfare agent, a portion of the toxic chemical may be absorbed, dissolve into or otherwise be present below the external surface (i.e. sub-surface). As such, CARC-painted stainless steel panels were used to demonstrate the ability of the process described herein to enhance the decontamination efficacy associated with Immediate and Operational decontamination operations.

In the examples below, decontamination mitts were prepared and used to demonstrate decontamination processes. Decontamination mitts were prepared using a polyester textile onto which zirconium oxy-hydroxide was immobilized. Mitts were comprised of the zirconium-oxyhydroxide loaded textile and measured nominally 7.5 inches (19 cm) wide by nominally 12" (30 cm) long. The mitts comprised two usable sides. A thin cloth impregnated with dried soap measuring 4" by 6" was used to apply solvent to the panel.

As per the following examples, the process was evaluated by contaminating a 0.25 m² CARC painted stainless steel panel with nominally 2.5 g of chemical agent simulant as about 5 µl droplets. The panel was allowed to stand for 15 minutes following contact to allow a portion of the chemical agent simulant to penetrate the paint (i.e. become sub-surface). At this time, the panel was decontaminated using a process described herein. Upon completion, the panel was evaluated for contact hazard. The contact hazard evaluation was performed by placing five 2" by 2" pieces of latex at discrete locations on the panel. A 1 kg weight was placed on top of the latex, which was allowed to stand for 5 minutes. At this time, the latex was removed and subjected to analysis. The contact hazard was determined as mg/m² chemical transferred to the latex. The decontamination efficacy was determined by extracting the residual chemical agent simulant from the panel using solvent.

*Example 1- Comparative:* A 0.25 square meter aluminum panel was contaminated with 2.5 g of chemical agent simulant DMMP as described previously (10 g/m² area contamination). The aluminum panel was chosen because the chemical agent simulants will be almost exclusively located at the external surface. The droplets were allowed to stand on the panel for 15 minutes prior to decontamination. The panel was decontaminated using the mitt previously described by contacting the panel first with a first side of the mitt, followed by repeating the operation with a second side of the mitt. The panel was evaluated for residual DMMP. The decontamination efficacy was determined to be greater than 99.5%. The test was repeated using chemical warfare agent simulant CEPS. The decontamination efficacy was determined to be greater than 99.5%. These results demonstrate the ability of the decontamination mitt to remove chemical warfare agent simulant from the external surface of an item.

*Example 2* - *Comparative:* A 0.25 square meter CARC-painted stainless steel panel was contaminated with 2.5 g of chemical warfare agent simulant DMMP as previously described (10 g/m2 area contamination). The droplets were allowed to stand on the panel for 15 minutes prior to decontamination. During this time, the droplets were observed to spread across the surface. The panel was decontaminated using the mitt previously described by contacting the panel first with a first side of the mitt, followed by repeating the operation with a second side of the mitt. The panel was evaluated for contact hazard, then residual DMMP. The test was repeated using chemical warfare agent simulant CEPS. The table below reports the contact hazard and decontamination efficacy for each chemical warfare agent simulant.

| **Simulant** | **Contact Hazard** | **Decontamination Efficacy** |
|---|---|---|
| DMMP | 1,060 mg/m² | 82.4% |
| CEPS | 1,146 mg/m² | 85.6% |

Results demonstrate that the decontamination mitt did not remove greater than 90% of either chemical warfare agent simulant from the CARC-painted panel. Results also demonstrate that the contact hazard is significant.

*Example 3* - *Comparative:* A 0.25 square meter CARC-painted stainless steel panel was contaminated with 2.5 g of chemical warfare agent simulant DMMP as previously described (10 g/m² area contamination). The droplets were allowed to stand on the panel for 15 minutes prior to decontamination. During this time, the droplets were observed to spread across the surface. 35 ml of water was added to a small bag. To the bag was added the soap impregnated towel, which was dampened with the water. The towel was applied to the panel for approximately 2 minutes. Upon completion of the operation, the residual soap solution was removed from the panel using a dried cloth. The panel was evaluated for contact hazard, then residual DMMP. The test was repeated using CEPS.

| **Simulant** | **Contact Hazard** | **Decontamination Efficacy** |
|---|---|---|
| DMMP | 1,217 mg/m² | 85.7% |
| CEPS | 1,920 mg/m² | 82.7% |

Results demonstrate that the soap solution did not remove greater than 90% of either chemical warfare agent simulant from the CARC-painted panel. Results also demonstrate that the contact hazard is significant.

*Example 4:* A 0.25 square meter CARC-painted stainless steel panel was contaminated with 2.5 g of chemical warfare agent simulant DMMP as previously described (10 g/m² area contamination). The droplets were allowed to stand on the panel for 15 minutes prior to decontamination. During this time, the droplets were observed to spread across the surface. The panel was decontaminated using the mitt previously described by contacting the panel first with a first side of the mitt. Following this operation, 35 ml of water was poured onto the panel and rubbed across the panel using a dry cloth. Upon completion, the excess water was removed using the second side of the mitt. The panel was evaluated for contact hazard, then residual DMMP.

The above test was repeated with the panel decontaminated first using a first side of the mitt. Next, 35 ml of water was poured into a small bag that contained the mitt. To the small bag was added the soap-impregnated towel, which was subsequently dampened by the water. The towel was applied to the panel for approximately 2 minutes. Upon completion of the operation, the residual soap solution was removed from the panel using a second side of the mitt. The panel was evaluated for contact hazard, then residual DMMP.

| **Simulant** | **Contact Hazard** | **Decontamination Efficacy** |
|---|---|---|
| DMMP - water only | 82 mg/m² | 96.5% |
| DMMP - soap towel | 105 mg/m² | 97.3% |

Results demonstrate that the process greatly reduces the DMMP contact hazard by over an order in magnitude while increasing the decontamination efficacy to greater than 95%.

*Example 5:* A 0.25 square meter CARC-painted stainless steel panel was contaminated with 2.5 g of chemical warfare agent simulant CEPS as previously described (10 g/m² area contamination). The droplets were allowed to stand on the panel for 15 minutes prior to decontamination. During this time, the droplets were observed to spread across the surface. The panel was decontaminated using the mitt previously described by contacting the panel first with a first side of the mitt. Following this operation, 35 ml of water was poured into a small bag. To the small bag was added the soap-impregnated towel, which was subsequently dampened by the water. The towel was applied to the panel for approximately 2 minutes. Upon completion of the operation, the residual soap solution was removed from the panel using a second side of the mitt. The panel was evaluated for contact hazard, then residual CEPS.

The above test was repeated with the panel decontaminated first using a first side of the mitt. Next, 20 ml of decane was added to the panel and rubbed into the panel for approximately 2 minutes using a dry cloth. Decane was employed to represent an organic solvent such as fuel. Upon completion of the operation, the residual decane was removed from the panel using a second side of the mitt. The panel was evaluated for contact hazard, then residual CEPS. Results of these tests are presented in the table below.

| **Simulant** | **Contact Hazard** | **Decontamination Efficacy** |
|---|---|---|
| CEPS - soap towel | 282 mg/m² | 96.3% |
| CEPS - Decane | 377 mg/m² | 95.9% |

Results demonstrate that the process greatly reduces the CEPS contact hazard by a factor of 3 to 4 over that achieved using just the mitt while increasing the decontamination efficacy to greater than 95%.

Although examples have been described above, other variations and examples may be made from this disclosure without departing from the spirit and scope of these disclosed examples.

## Claims

1. A process comprising:
contacting an item with a dry media to remove a first portion of a chemical warfare agent from the item;
contacting the item with solvent to contaminate the solvent with a second portion of the chemical warfare agent from the item; and
removing the contaminated solvent from the item.

2. The process according to claim 1, wherein the dry media comprises a mitt.

3. The process according to claim 2, wherein contacting an item with a dry media comprises contacting a first side of the mitt with the item.

4. The process according to one of claims 1-2, wherein removing the contaminated solvent from the item comprises contacting a second side of the mitt with the item.

5. The process according to one of the preceding claims, wherein the dry media comprises an absorptive material or an absorptive/reactive material.

6. The process according to one of the preceding claims, wherein the dry media comprises a material selected from carbon, resins, and zeolites.

7. The process according to claim 5, wherein the absorptive/reactive material comprises a material selected from oxides, hydroxides, and oxy-hydroxides of a metal selected from aluminum, silicon, magnesium, calcium, titanium, manganese, iron, cobalt, copper, zinc, and zirconium, and mixed metal oxides, hydroxides and oxy-hydroxides.

8. The process according to one of the preceding claims, wherein the dry media comprises a media selected from a loose powder, a powder adhered to a textile, a media adhered to synthetic fibers, a media adhered to natural fibers, and a media adhered to sponge.

9. The process according to one of the preceding claims, wherein the solvent is selected from water, fuel, soapy water, and bleach.

10. The process according to one of the preceding claims, comprising adding water to a soap-impregnated textile, and wherein contacting the item with solvent comprises contacting the item with the textile.

11. A device comprising:
a first side comprising a dry media applicator to remove a first portion of a chemical warfare agent from an item; and
a second side comprising an absorptive material to remove a solvent contaminated with a second portion of a chemical warfare agent from the item,
wherein the first and second sides are of a unitary whole.

12. The device according to claim 11, wherein the device comprises a mitt.

13. The device according to one of claims 11-12, wherein the dry media applicator of the first side comprises an absorptive material and/or a material selected from carbon, resins, and zeolites.

14. The device according to one of claims 11-13, wherein the dry media applicator of the first side comprises an absorptive/reactive material.

15. The device according to claim 14, wherein the absorptive/reactive material comprises a material selected from oxides, hydroxides, and oxy-hydroxides of a metal selected from aluminum, silicon, magnesium, calcium, titanium, manganese, iron, cobalt, copper, zinc, and zirconium, and mixed metal oxides, hydroxides and oxy-hydroxides.

16. The device according to one of claims 11-15, wherein the dry media applicator of the first side comprises a media selected from a loose powder, a powder adhered to a textile, a media adhered to synthetic fibers, a media adhered to natural fibers, and a media adhered to sponge.

17. The process according to one of claims 1-10 or the device according to claims 11-16, wherein the absorptive material of the second side comprises a material selected from microporous fabric and sponge and/or wherein the absorptive material of the second side comprises soap in the material.
